## Europäisches Patentamt

## European Patent Office

## Office européen des brevets

(11) Veröffentlichungsnummer: **0 018 011**
A1

(12) # EUROPÄISCHE PATENTANMELDUNG

(21) Anmeldenummer: **80102137.9**

(22) Anmeldetag: **21.04.80**

(51) Int. Cl.³: **H 01 R 43/02, H 01 F 41/10**

(30) Priorität: **23.04.79 DE 2916349**

(43) Veröffentlichungstag der Anmeldung: **29.10.80**
**Patentblatt 80/22**

(84) Benannte Vertragsstaaten: **AT FR GB IT SE**

(71) Anmelder: **SIEMENS AKTIENGESELLSCHAFT Berlin und München, Postfach 22 02 61, D-8000 München 22 (DE)**

(72) Erfinder: **Edinger, Egon, Friedemann-Bach-Strasse 69, D-8032 Gräfelfing (DE)**
Erfinder: **Pedall, Friedrich, Johann-Clanze-Strasse 53, D-8000 München 70 (DE)**

(54) Verfahren zum Herstellen einer oder mehrerer Kontaktverbindungen zwischen einem lackisolierten Draht und einem oder mehreren Kontaktteilen eines elektrischen Bauteiles.

(57) Es ist bereits ein Verfahren bekannt geworden, welches das Verlöten relativ dünner Spulendrähte (12, 13) mit Kontaktteilen (8, 9) großer Wärmekapazität erlaubt. Hierbei werden die Kontaktteile (8, 9) und das Lot auf eine Temperatur erwärmt, die ausreicht, um ein Abschmelzen der Lackisolation und sichere Kontaktverbindungen (2, 3) zwischen Draht und Kontaktteilen zu gewährleisten. Sollen mehrere Kontaktverbindungen gleichzeitig hergestellt werden, so ist hierfür Voraussetzung, daß sich die Kontaktteile (8, 9) und das Lot gleichzeitig konstant erwärmen. Dies ist bei galvanisch beschichteten Kontaktteilen (8, 9) meist nicht der Fall. Abhilfe kann gemäß der Anmeldung dadurch geschaffen werden, daß zusätzlich mit Hilfe von Temperaturmeßgeräten (29, 30) die Temperatur der Lötstellen (2, 3) überwacht wird.

ACTORUM AG

SIEMENS AKTIENGESELLSCHAFT       Unser Zeichen
Berlin und München           VPA **79 P 7 0 5 6**

Verfahren zum Herstellen einer oder mehrerer Kontaktverbindungen zwischen einem lackisolierten Draht und
einem oder mehreren Kontaktteilen eines elektrischen
Bauteiles

Die Erfindung bezieht sich auf ein Verfahren zum Herstellen einer oder mehrerer Kontaktverbindungen zwischen
einem lackisolierten Draht und einem oder mehreren
Kontaktteilen eines elektrischen Bauteiles durch Weichlöten unter Verwendung einer portionierten Lötmenge und
einer jeder Lötstelle zugeordneten Wärmequelle, welche
solange eingeschaltet bleibt, bis das oder die Kontaktteile und das Lot auf eine Temperatur erwärmt sind, die
ausreicht, um einerseits ein Abschmelzen der Lackisolation des Drahtes und andererseits eine sichere
Kontaktverbindung zwischen Draht und Kontaktteil bzw.
Kontaktteilen zu gewährleisten.

Durch die DE-OS 27 39 418 (VPA 77 P 7112 BRD) ist ein
Verfahren dieser Art bekannt geworden. Bei diesem be-

Hs 1 Kow / 4.4.1979

0018011

79 P7056

kannten Verfahren wird vor dem Erwärmen der Lötstelle bzw. der Lötstellen das Kontaktstück an einem und der Draht am anderen Pol eines elektrischen Steuerstromkreises gelegt. Anschließend werden die zu kontaktierenden Teile und das Lot solange erwärmt, bis durch das Abschmelzen der Lackisolation des Drahtes zwischen Draht und Kontaktteil ein galvanischer Kontakt entsteht, der zum Abschalten der Wärmequellen benutzt wird. Sollen beide Drahtenden mit je einem Kontaktstück verbunden werden, so sind zwei Wärmequellen erforderlich. In diesem Fall ist das eine Kontaktstück mit dem einen und das andere Kontaktstück mit dem anderen Pol des Steuerstromkreises verbunden. Die Wärmequellen werden dann abgeschaltet, wenn beide Kontaktverbindungen hergestellt sind.

Vorzugsweise werden zum Erwärmen der Lötstellen als Wärmequellen Hochfrequenzspulen verwendet, die an einem Hochfrequenzgenerator angeschlossen sind. Durch das Hochfrequenzfeld entstehen im zugeordneten Kontaktteil und in dem Lot Wirbelströme, so daß sich beide Teile nacheinander erwärmen. Dies wird dadurch erreicht, daß die Frequenz des Hochfrequenzgenerator auf die Art der zu verbindenden Teile abgestimmt ist. Die Hochfrequenzenergie erlaubt es, daß bedingt durch die vergleichsweise große Masse zunächst das Kontaktstück und das Lot erwärmt werden, hingegen der dünne Kupferdraht nur mittelbar über das schmelzflüssig werdende Lot durch die Lackschicht eine langsam ansteigende Erwärmung erfährt, bis das schmelzflüssige Zinn die Drahtisolation abschmelzt, worauf dann die Wärmequelle unmittelbar abgeschaltet wird. Die Einwirkzeit der Wärmequelle auf die Lötstelle ist daher auf das unbedingt erforderliche Zeitmaß begrenzt. Auf diese Weise besteht die Möglichkeit, auch relativ dünne Drähte mit Teilen großer Wärmekapazität zu verlöten.

Sollen beide Drahtenden einer Spule gleichzeitig verlötet werden, was bei Großserien stets angestrebt wird,
so muß für jede der beiden Lötstellen eine Hochfrequenzspule vorgesehen sein. Bei dem in der DE-OS 27 39 418 beschriebenen Verfahren sind dann die beiden Hochfrequenzschleifen in Reihe geschaltet und liegen an einem gemeinsamen Hochfrequenzgenerator. Voraussetzung für einwandfreie Lötverbindungen ist jedoch, daß sich die beiden
Lötstellen gleichzeitig und konstant erwärmen. Diese
Voraussetzung ist jedoch nur dann gegeben, wenn für die
Kontaktteile homogenes, nicht korodierendes Material verwendet wird oder bei galvanisch behandelten Kontaktteilen die Oberflächenschichtdicken konstant sind. Bei
unterschiedlichen Oberflächenschichtdicken und Erwärmung
über Hochfrequenz ergibt sich wegen des Skin-Effektes
eine unterschiedliche Erwärmung der Lötstellen. Dies
hat zur Folge, daß einzelne Lötstellen überhitzt werden
können. Erhöhter Ausschuß ist dann die Folge. Um letzteres
zu verhindern, war es bisher notwendig, die Schichtdicken
der Galvanikoberflächen sehr genau zu kontrollieren.

Der Erfindung liegt die Aufgabe zugrunde, ein Verfahren
der eingangs beschriebenen Art derart weiter zu entwickeln, daß insbesondere bei Verwendung von galvanisch
beschichteten Kontaktteilen bei der Herstellung der
Kontaktverbindungen keine Überhitzung einzelner Lötstellen mehr möglich ist. Das erfindungsgemäße Verfahren
ist dadurch gekennzeichnet, daß jeder Lötstelle ein
Temperaturmeßgerät zugeordnet ist, mit dem die Temperatur
dieser Lötstelle überwacht wird. Vorzugsweise wird nach
Erreichen der erforderlichen Abschmelz- bzw. Löttemperatur
die dieser Lötstelle zugeordnete Wärmequelle abgeschaltet.

Besonders vorteilhaft ist es, wenn bei der Herstellung
nur einer Kontaktverbindung das Kontaktstück an einem und

0018011

79 P 7 0 5 6

der Draht am anderen Pol eines elektrischen Steuerstromkreises liegen und daß der beim Abschmelzen der Lackisolation des Drahtes entstehende galvanische Kontakt
zwischen Draht und Kontaktstück zum Abschalten der Wärmequelle benutzt wird und daß mit Hilfe des Temperaturmeßgerätes die Maximaltemperatur der Lötstelle überwacht wird.
Vorzugsweise werden bei gleichzeitiger Herstellung von
zwei Kontaktverbindungen an einem gemeinsamen Draht an
jedem der beiden Kontaktteile ein Pol eines Steuerstromkreises angelegt, welcher beim Abschmelzen der Lackisolation an den Drahtenden geschlossen und die beiden
Wärmequellen abschaltet, und daß mit Hilfe des jeder Lötstelle zugeordneten Temperaturmeßgerätes die Maximaltemperatur dieser Lötstellen überwacht wird. Durch diese
doppelte Überwachung der Lötstellen ergibt sich somit
ein System, das sowohl ein Überhitzen einzelner Lötstellen verhindert, als auch die kürzest mögliche Lötzeit und damit geringste thermische Belastung der Spulendrähte gewährleistet. Dies ist für die Produktqualität
von entscheidender Bedeutung. Die Lötstellentemperatur
kann berührungslos z.B. über Infrarotgeräte oder über
Thermoelemente erfaßt und über an sich bekannte Einrichtungen voreingestellt werden.

Anhand der Zeichnung, in der ein Anwendungsbeispiel dargestellt ist, wird das erfindungsgemäße Verfahren näher
erläutert. Es zeigen:

Figur 1 das Kontaktieren eines dynamischen Wandlers und
Figur 2 ein Detail gemäß Figur 1 in vergrößertem Maßstab.

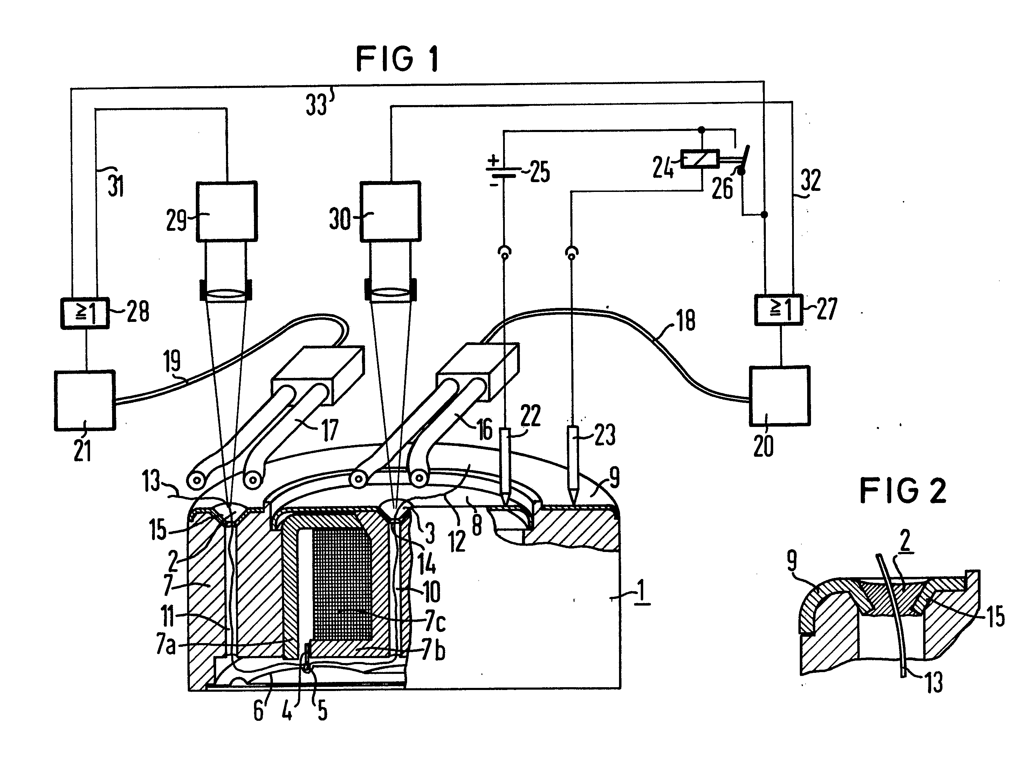

Bei dem dargestellten Anwendungsbeispiel sollen bei einem
dynamischen Wandler 1 gleichzeitig zwei Lötstellen 2 und
3 hergestellt werden. Figur 2 zeigt die Lötstelle 2 in
vergrößerter Darstellung. Der dynamische Wandler 1 enthält eine Schwingspule 4, die auf einem Spulenträger 5 fest angeordnet ist. Der Spulenträger 5 ist über eine Membran 6 mit einem ringförmigen Gehäuseteil 7 verbunden. An dem Gehäuseteil ist ein Kontaktboden 8 und ein Kontaktring 9 befestigt. Die Schwingspule 4 schwingt in einem Luftspalt zwischen einem Magnettopf 7a und einer Polplatte 7b frei. Ein Permanentmagnet 7c erzeugt das für die elektro-akustische Sprachwandlung notwendige Magnetfeld. Über einen Kanal 10 des Magnetsystems und einen Kanal 11 des Gehäuses 7 sind die beiden Drahtenden 12 und 13 der Schwingspule 4 geführt. Sie sind weiterhin durch düsenförmige Öffnungen 14 und 15 (Lötdüsen) im Kontaktboden 8 bzw. im Kontaktring 9 gefädelt und sollen mit diesen Teilen weichverlötet werden. Zur Herstellung dieser Kontaktverbindungen werden die beiden Lötstellen 2 und 3 mit Hilfe einer Wärmequelle erwärmt, was bei dem dargestellten Ausführungsbeispiel durch Induktorschleifen 16 und 17 erfolgt, die über Leitungen 18 und 19 mit HF-Generatoren 20 und 21 in Verbindung stehen. Die vorderen Enden der Induktorschleifen 16 und 17 bilden zweckmäßigerweise Spiralen, die möglichst nahe an die Lötstellen 2 und 3 herangebracht werden. Durch die Öffnungen dieser Spiralen wird eine genau portionierte Lötmenge an die Lötdüsen 14 und 15 abgegeben. Sobald die Induktorschleifen 16 und 17 mit HF-Energie versorgt werden, werden die Lötdüsen 14 und 15 im Kontaktboden 8 bzw. im Kontaktring 9 erwärmt.

Das Lötzinn, das sich in den Lötdüsen 14 und 15 befindet, schmilzt und benetzt, nachdem die Isolierung der Drähte durchgeschmolzen ist, bei etwa 220° die Drahtenden 12 und 13 der Schwingspule 4. Bei gleicher Aufwärmgeschwindigkeit der beiden Lötstellen 2 und 3 erfolgt dieses Kontaktieren etwa gleichzeitig.

Zur Überwachung des Kontaktierungsvorgangs sind, wie bei der Vorrichtung nach der DE-OS 27 39.418, zwei Kontaktstifte 22 und 23 vorgesehen, die mit dem Kontaktboden 8 bzw. dem Kontaktring 9 in leitender Verbindung
stehen. An diese Kontaktstifte 22 und 23 ist ein ein
Relais 24 und eine Stromquelle 25 enthaltender Steuerstromkreis angeschlossen. Vor der Herstellung der beiden
Kontaktverbindungen ist der Widerstand zwischen den
Kontaktstiften 22 und 23 infolge der isolierten Drahtenden sehr hoch, so daß das Relais 24 nicht ansprechen
kann. Sobald aber eine galvanische Verbindung zwischen
dem Drahtende 12 und dem Kontaktboden 8 einerseits bzw.
dem Drahtende 13 und dem Kontaktring 9 andererseits
hergestellt ist, wird dieser Widerstand sehr klein, so
daß das Relais 24 die volle Spannung erhält und anzieht.
Damit wird über einen Kontakt 26 des Relais 24 und
Leitung 33 ein Signal an die ODER-Stufen 27 und 28
gegeben, wodurch die beiden HF-Generatoren 20 und 21
abgeschaltet werden. Die Lötstellen 2 und 3 können somit abkühlen.

Erwärmen sich die beiden Lötstellen 2 und 3 jedoch
unterschiedlich schnell, dann erreicht beispielsweise
die Lötdüse 15 im Kontaktring 9 die Löttemperatur von
$200^o$ bis $250^o$ C zuerst. Da die Löttemperatur der Lötdüse 14 im Kontaktboden 8 zu diesem Zeitpunkt noch
nicht erreicht ist, wird die Lötstelle 2 weiterhin
erwärmt, so daß die Gefahr einer Überhitzung dieser
Lötstelle 2 besteht. Abgeschaltet werden die beiden
HF-Generatoren 20 und 21 erst, wenn auch die galvanische
Verbindung an der Lötstelle 3 hergestellt ist.

Um eine Überhitzung der beiden Lötstellen mit Sicherheit zu verhindern, sind Temperaturmeßgeräte 29 und 30
vorgesehen, die die Temperatur der einzelnen Lötstellen
2 und 3 überwachen.Die Temperaturmeßgeräte 29 und 30
sind auf die maximal zulässige Temperatur der Lötstellen (des Lotes) eingestellt. Sobald diese Temperatur von einem der beiden Temperaturmeßgeräte 29 und 30 festgestellt wird, wird über Leitung 31 oder 32 sowie ODER-Gatter 27 oder 28 der zugehörige HF-Generator 20 oder 21 abgeschaltet, so daß die diesem HF-Generator zugeordnete Lötstelle abkühlen kann. Ein unzulässiges Überhitzen dieser Lötdüse wird daher mit Sicherheit vermieden.

Erreicht schließlich die andere Lötdüse die erforderliche Löttemperatur, so wird nach Durchsmhmelzen der Isolation des Drahtendes über die Kontaktstifte 22 und 23 auch diese Wärmequelle abgeschaltet, da nunmehr die galvanische Verbindung der beiden Lötstellen 2 und 3 hergestellt ist.

Durch die beschriebene Überwachung der beiden Lötstellen 2 und 3 mit Hilfe der Temperaturmeßgeräte 29 und 30 einerseits und über die Kontaktstifte 22 und 23 andererseits kann sowohl ein Überhitzen der einzelnen Lötdüsen als auch eine unzulässige Taktzeitverlängerung vermieden werden.

4 Patentansprüche

1 Figur

Patentansprüche

1. Verfahren zum Herstellen einer oder mehrerer Kontaktverbindungen zwischen einem lackisolierten Draht und einem oder mehreren Kontaktteilen eines elektrischen Bauteiles durch Weichlöten unter Verwendung einer portionierten Lötmenge und einer jeder Lötstelle zugeordneter Wärmequelle, welche solange eingeschaltet bleibt, bis das oder die Kontaktteile und das Lot auf eine Temperatur erwärmt sind, die ausreicht, um einerseits ein Abschmelzen der Lackisolation des Drahtes und andererseits eine sichere Kontaktverbindung zwischen Draht und Kontaktteilen zu gewährleisten, dadurch g e k e n n - z e i c h n e t , daß jeder Lötstelle (2, 3) ein Temperaturmeßgerät (29, 30) zugeordnet ist, mit dem die Temperatur dieser Lötstelle (2, 3) überwacht wird.

2. Verfahren nach Anspruch 1, dadurch g e k e n n - z e i c h n e t , daß nach Erreichen der erforderlichen Abschmelz- bzw. Löttemperatur die dieser Lötstelle (2 bzw. 3) zugeordnete Wärmequelle (16 bzw. 17) abgeschaltet wird.

3. Verfahren nach Anspruch 1 oder 2, dadurch g e k e n n - z e i c h n e t , daß bei gleichzeitiger Herstellung von zwei Kontaktverbindungen an einem gemeinsamen Draht an jedem der beiden Kontaktteile (8, 9) ein Pol eines Steuerstromkreises (22 bis 26) angelegt ist, welcher beim Abschmelzen der Lackisolation an den Drahtenden (12, 13) geschlossen und die beiden Wärmequellen (16, 17) abschaltet, und daß mit Hilfe des jeder Lötstelle (2, 3) zugeordneten Temperaturmeßgerätes (29, 30) die Maximaltemperatur dieser Lötstellen (2, 3) überwacht wird.

4. Verfahren nach Anspruch 1 oder 2, dadurch g e -
k e n n z e i c h n e t , daß bei der Herstellung nur
einer Kontaktverbindung ein Kontaktteil (8 oder 9) an
einem und ein Drahtende (12 oder 13) am anderen Pol
eines elektrischen Steuerstromkreises (22 bis 26) liegen
und daß der beim Abschmelzen der Lackisolation des
Drahtes (12, 13) entstehende galvanische Kontakt zwischen
Drahtende (12 oder 13) und Kontaktteil (8 oder 9) zum Abschalten der Wärmequelle (16 oder 17) benutzt wird und
daß mit Hilfe des dieser Lötstelle (2 oder 3) zugeordneten
Temperaturmeßgerätes (16 oder 17) die Maximaltemperatur
dieser Lötstelle (2 oder 3) überwacht wird.

0018011

1/1

FIG 1

FIG 2

0018011

Nummer der Anmeldung

EP 80 10 2137.9

Europäisches
Patentamt

**EUROPÄISCHER RECHERCHENBERICHT**

| | **EINSCHLÄGIGE DOKUMENTE** | | KLASSIFIKATION DER ANMELDUNG (Int.Cl.³) |
|---|---|---|---|
| Kategorie | Kennzeichnung des Dokuments mit Angabe, soweit erforderlich, der maßgeblichen Teile | betrifft Anspruch | |
| | US - A - 4 079 225 (A.S. WARNER) <br> * Zusammenfassung; Spalte 3, Zeilen 10 bis 20; Spalte 4, Zeilen 30 bis 43; Fig. 1 bis 3D * <br><br> -- <br><br> | 1,2,4 | H 01 R 43/02 <br> H 01 F 41/10 |
| D,A | DE - A1 - 2 739 418 (SIEMENS) <br> * ganzes Dokument * <br><br> ---- | | |

**RECHERCHIERTE SACHGEBIETE (Int. Cl.³)**

H 01 F 41/10

H 01 R 43/02

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort <br> Berlin | Abschlußdatum der Recherche <br> 22-07-1980 | Prüfer <br> HAHN |
|---|---|---|

EPA form 1503.1  06.78